# EUROPEAN PATENT APPLICATION

(11) **EP 2 592 378 A1**
(43) Date of publication of application: **15.05.2013**
(21) Application number: 12191471.7
(22) Date of filing: 06.11.2012
(51) Int. Cl.: G01B 7/04

(54) **Assembly and method for magnetically marking a wire and for detecting a magnetic mark**

(30) Priority: 08.11.2011 US 201113291704
(71) Applicant: The Goodyear Tire & Rubber Company, Akron, OH 44316-0001 (US)
(72) Inventor: Nosbusch, Cliff, 9466 Weiler/Putscheid (LU)
(74) Representative: Kutsch, Bernd

(57) **Abstract**

A method for magnetically marking a wire (10) and for detecting a magnetic mark on the wire (10) is disclosed. The method comprises the steps of magnetically marking the wire (10) prior to entering an apparatus; physically altering the wire with the apparatus; and detecting a magnetic mark on the wire (10) after exiting the apparatus. An assembly for practicing said method comprises an apparatus for altering the wire; an active coil (20) for magnetically marking the wire (10), the active coil (20) being disposed at a wire inlet of the apparatus; and a passive coil (40) for detecting a magnetic mark, the passive coil (40) being disposed at a wire outlet of the apparatus.

## Description

### Field of the Invention

The present invention relates to a method and an assembly for magnetically marking a wire and for detecting a respective magnetic mark. In particular, the invention relates to a control of output feed from wire spools and, more particularly, to a system for selectively stopping the output feed of such a wire spool.

### Background of the Invention

In the formations traversed by well bore, a logging tool may be suspended in the well bore by means of an electrical armored cable. The cable may be attached at one end to a well tool in a well bore and at an opposite end to a spooling winch on a logging truck at the earth surface. The spooling winch may be utilized to lower or raise the logging tool in the well bore so that the logging tool obtains data relative to the earth formations adjacent to the logging tool. The well bore may be filled with logging mud or other control fluids and the logging may be accomplished while pulling the logging tool from the bottom of the well bore towards the earth surface. For the data obtained relative to the earth formations to have any relevant meaning, it may be necessary to correlate the obtained data to the depth of the obtained data from the earth surface. This may be accomplished by measuring the length of a cable extending from the earth surface to the logging tool.

Measurement of the cable length may be accomplished by either a mechanical wheel system or a magnetic mark system or a combination of the systems. In a mechanical wheel system, a calibrated wheel tangentially contacts the cable at the earth surface and is rotated in response to cable movement. The rotation of the wheel is translatable into a function of the cable length which passes by the wheel. In a magnetic mark system, a cable is marked with magnetic marks at predetermined and defined intervals along the length of the entire cable. When a magnetic mark on the cable passes a magnetic mark detector at the surface, the mark is detected and the depth or the length of the cable is determined relative to the number of counted intervals.

A number of factors may affect the actual length of a cable carrying a well tool in a well bore. For example, a cable has elastic stretch because of the weight of the cable and because of the weight of the well tool in the well bore. Thus, magnetic marks spaced at a typical spacing of 30 m under a given tension may be spaced apart more than 30 m in borehole use because of the increased tension which causes elastic stretch in the cable in use.

A cable may have a composite structure and a permanent stretch characteristic. That is, the cable may elongate permanently by the application of tension until it is sufficiently "seasoned" to eliminate further significant and/or permanent stretch. In addition, temperatures encountered in a well bore may produce an effect on the cable which may cause stretch to occur while in a borehole.

The characteristics of cable stretch may be well known for plastic/permanent stretch. Stretch tables may be available for the various types of cable which will provide a determination of elastic stretch or permanent stretch for given conditions of tension. However, the logging operation may not be a static condition. The well tool dynamically moves through a well bore fluid so that tension and the stretch length of a cable in the borehole may be constantly changing and thus corrections made while the cable is moving may be imprecise or approximations.

The measurement by the wheel at the surface may be in error because of slippage between the wheel and the cable. Wear of the wheel surface may alter its calibration. Bearings and linkages may cause wheel torque and slippage. Thus, the depth measurement obtained from a wheel may be inaccurate.

With magnetic marks along the cable, inaccuracies may include extraneous or false magnetic marks along the cable which may trigger an error in the depth measurement and lack of magnetic marks which have deteriorated in strength so that they become unmeasurable or undetectable in operation.

Permanent or construction stretch in the cable may be a significant factor before the cable is "seasoned" so that any elastic stretch calculations may be insignificant until a sufficient number of trips of cable in the borehole stabilize the cable as to permanent stretch. This may require the operator to remeasure and place new magnetic marks on the cable after every job until the cable is permanently stretched.

The cables may have an elastic stretch coefficient which is a predetermined value for a given type of cable, but the cable manufacture may cause the elastic coefficient to vary from end to end of an individual cable and inaccuracy may occur because the existing stretch chart tables are based upon an average coefficient rather than an actual coefficient of the cable. In present systems there is no way to adjust for a different stretch coefficient for a cable.

A precise depth measurement for the data which is recorded on a well log as a function of depth may be significant because it is customary to obtain several different logs at different times of a well bore and to correlate the data for interpretation purposes. Obviously, if the depth measurement for the data varies from run to run, no meaningful correlation may be accomplished. In addition, where different depth measurements for data result, it may be difficult to determine what the accurate depth is for the data. This may be particularly significant where attempting reservoir analysis from spaced wells or correlating strata between wells.

In a well bore, the weight or load of a cable and the weight or load of the well tool may affect the stretch of the cable. Also, while moving through drilling mud or control fluids in a well bore, the load on the cable may be affected by the cable speed and the borehole tool fluid relationship going in or out of a well bore which may increase or decrease tension and hence length of the cable.

As mentioned before, there are two different types of cable stretch, i.e. permanent elongation and elastic elongation. Permanent elongation, also known as constructional or plastic stretch, is the amount of stretch or increase in length in a cable which occurs over time and use until a cable is "seasoned". A seasoned cable is one in which irreversible elongation or stretch does not appreciably occur with use.

One method may employ two tangential measuring wheels which engage the outer surface of a cable and a magnetic mark detector for detecting magnetic marks placed on the cable. In addition, a tension load cell may be connected to a cable sheeve to measure tension of the cable. Such a method requires valid detectable magnetic marks positioned accurately along the length of the cable at 30 m intervals at a reference tension of 450 kg on the cable at the time the marks are applied. The magnetic marks are the primary measurement parameter and the measuring wheels may be used only to interpolate between the length of cable defined between the spaced magnetic marks. Only one measuring wheel may be necessary for operation and a second wheel may be a backup.

To minimize the effects of random magnetic noise or false marks on the cable, the method may utilize a "window" period or span between 29.4 m to 30.6 m from a previous magnetic mark. The window period or span may be the only time that the magnetic mark detector may accept/detect magnetic marks. For example, if a first valid magnetic mark is detected at 1.8 m, the method would then accept magnetic marks every 30 m. That is, the method would accept the next valid magnetic mark to occur between 31.2 m and 32.4 m. This plus or minus 0.6 m window may allow detection of magnetic marks substantially independent of the degree of wheel wear, slippage, and/or damage.

Constant parameters for the cable, temperatures, coefficients may be input to a CPU summation means which may also receive measured data inputs of length and tension and determine the net change of cable length. The net change of cable length may be used to constantly correct the length measurements sent to a recorder so that the log depth may be corrected for change in cable length due to wheel measurements, tension, and temperature. The method may also provide a memory and visual display of input and measured parameters and determine, from the measurements, the line speed maximum tension and depth and indicate the occurrence of a predetermined number of weak marks. The method may also indicate the occurrence of false marks which occur between valid marks.

### Summary of the Present Invention

The invention relates to a method in accordance with claim 4 and to an assembly in accordance with claim 1.

Dependent claims refer to preferred embodiments of the invention.

An assembly in accordance with the present invention includes magnetically marks a wire and detects a magnetic mark on the wire. The assembly includes an apparatus for altering the wire, an active coil for magnetically marking a wire, and a passive coil for detecting a magnetic mark. The active coil is disposed at a wire inlet of the apparatus. The passive coil is disposed at a wire outlet of the apparatus.

According to a preferred aspect of the assembly, the apparatus may include dies for reducing a diameter of the wire.

According to another preferred aspect of the assembly, the active coil is energized with electrical pulses at a predetermined frequency.

According to yet another aspect of the assembly, the apparatus may coat the wire.

According to another preferred aspect of the assembly, the passive coil detects a fluctuation in magnetic field produced by the magnetic mark.

According to yet another preferred aspect of the assembly, a microcontroller transmits electrical impulses to the active coil and counts fluctuations in magnetic field at the passive coil.

According to still another preferred aspect of the assembly, the wire passes through loops of the active coil before entering the apparatus.

According to yet another preferred aspect of the assembly, the wire passes through loops of the passive coil after exiting the apparatus.

A method in accordance with the present invention magnetically marks a wire and detects a magnetic mark on the wire. The method includes: magnetically marking the wire prior to entering an apparatus; physically altering the wire with the apparatus; and detecting a magnetic mark on the wire after exiting the apparatus.

According to a preferred aspect of the method, the marking step includes passing the wire through an active coil.

According to another preferred aspect of the method, the detecting step includes passing the wire through a passive coil.

According to yet another preferred aspect of the method, the altering step includes reducing a diameter of the wire.

According to still another preferred aspect of the method, the marking step includes energizing an active coil with electrical pulses at a predetermined frequency.

According to yet another preferred aspect of the method, the altering step includes coating the wire with brass.

According to still another preferred aspect of the method, the detecting step includes detecting fluctuations in magnetic field at the passive coil.

According to yet another preferred aspect of the method, the method further includes the step of transmitting electrical impulses to the active coil.

According to still another preferred aspect of the method, the method further includes the step of counting fluctuations in magnetic field at the passive coil by a microprocessor.

According to yet another preferred aspect of the method, the marking step includes passing the wire through loops of the active coil before entering the apparatus.

According to still another preferred aspect of the method, the detecting step includes passing the wire through loops of the passive coil after exiting the apparatus.

### Brief Description of the Drawings

The present invention will be described by way of example and with reference to the accompanying drawings in which:
FIG. 1 schematically illustrates an assembly for use with the present invention;
FIG. 2 schematically illustrates the assembly of FIG. 1 under a different condition;
FIG. 3 schematically illustrates the effect of a magnet field on a wire/cord;
FIG. 4 schematically illustrates the effect of removing a magnet field on a wire/cord; and
FIG. 5 schematically illustrates a production line for use with the present invention.

### Detailed Description of Examples of the Present Invention

The wire and steel cord industry often requires stopping a machine when a spool is empty or a bad tail of the wire/cord arrives at the machine. An automatic stop system, in accordance with the present invention, may mark a position on a wire/cord and locate that same position when required. The wire/cord may be marked by a not visible, magnetic singe. The singe preferably does not influence the remainder of the process and may require other supplies, such as a coloring dye, a paper, or a sticker.

The magnetic singe may be detected by a simply electrical coil through which the wire/cord may pass lengthwise. Once detected, the magnetic singe may be amplified and sent to a micro controller (e.g., a personal computer). This micro controller may count/register impulses and/or stops of the machine at the proper positions. The automatic stop system may be utilized with a fine patenting/plating line and/or a fine drawing line for the wire/cord. The fine patenting/plating line may, for example, place the patented/plated wire/cord on 450 kg spools at 48 different machines. At each spool change, the line may be stopped so that the first 135 meters following a start will be scrap because of cooling/warm up of the fine patenting/plating temperature.

Conventionally, a piece of paper has been placed in the spool by hand near the end of the wire/cord and an operator has waited next to a machine to stop the spool when the paper falls out the spool. An automatic stop system in accordance with the present invention may stop the machine automatically. The automatic stop system may also be used on fine drawing machines, rough drawing machines, and intermediate drawing machines.

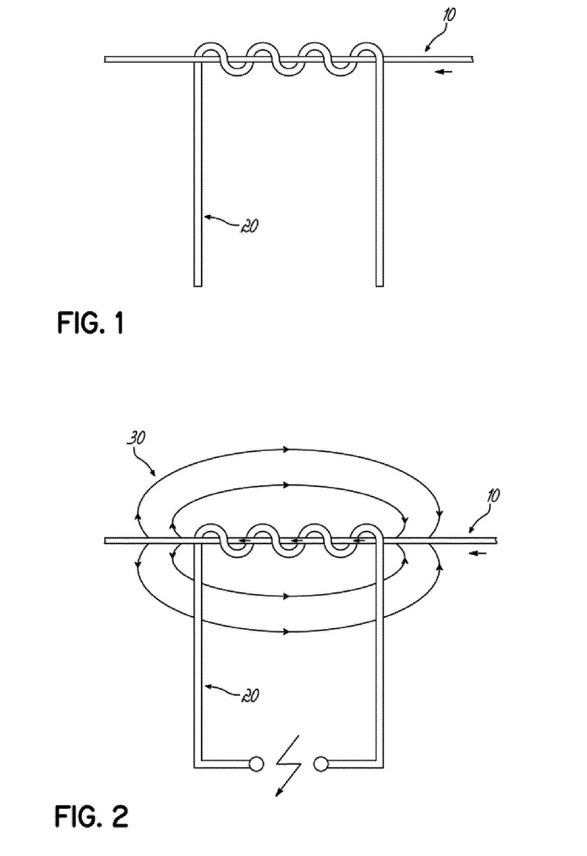

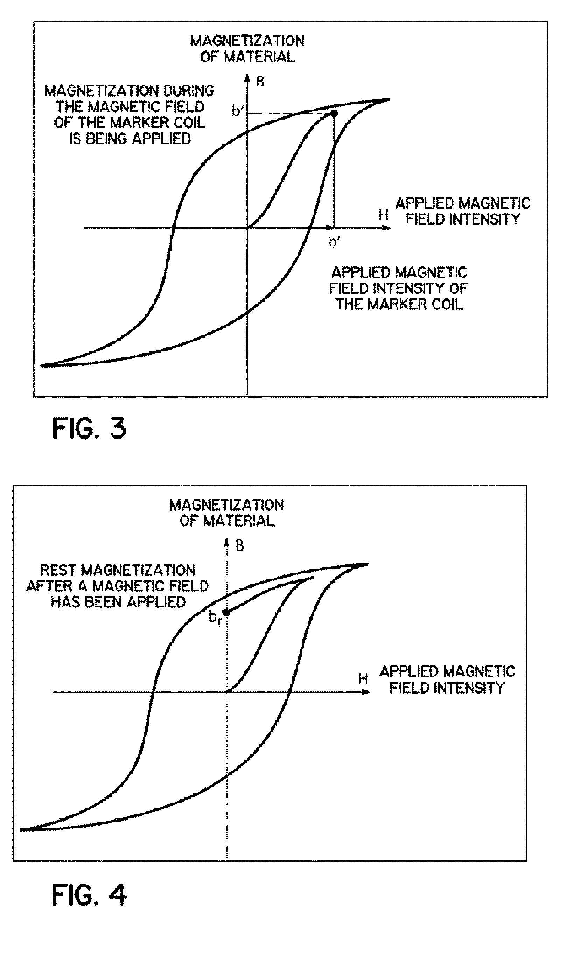

Referring now to FIG. 1, wire or cord 10 travels through a conductive electrically energizable coil 20 at the input end of a wire/cord patenting/plating/drawing line. FIG. 2 shows the coil 20 of FIG. 1 with a current running through it to create a magnetic field 30 for marking the wire/cord 10. As shown in FIG. 3, the wire/cord 10 becomes sufficiently magnetized, or magnetically marked, by the magnetic field 30 when the wire/cord passes through the magnetic field at a point (h', b') with a sufficient magnetic field density h' for producing a magnetic mark bᵣ (FIG. 4). When the marked portion of wire/cord 10 passes out of the magnetic field and/or the magnetic field drops to zero at that marked portion, the marked portion maintains the rest magnetization bᵣ. The wire 10 may also be in the form of a cord comprising one or more of the same or different wires.

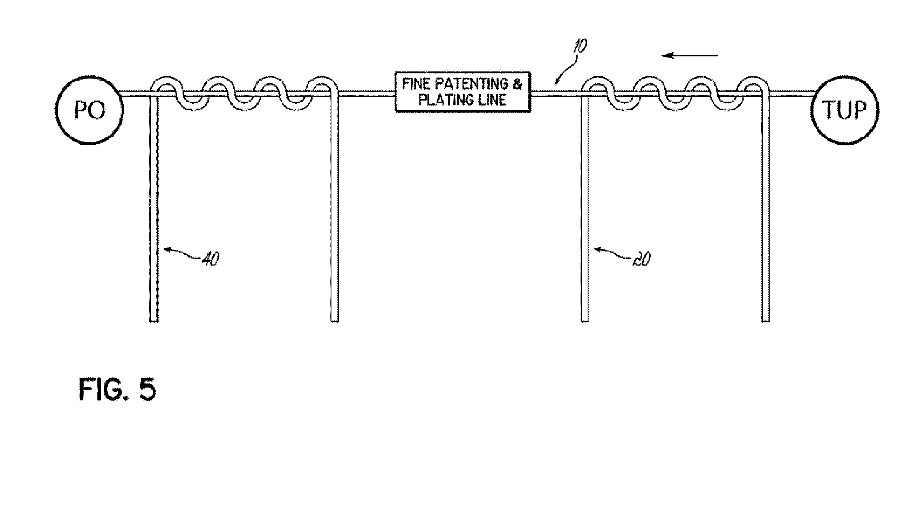

For example, the coil 20 may be energized with electrical pulses at a predetermined frequency at the take up end of a raw supply wire spool TUP at the input end of a patenting/plating line (FIG. 5). The predetermined frequency may be determined by the amount of elapsed time (e.g., 10 seconds) for the wire/cord 10 to travel a predetermined distance, or desired marking distance (e.g. 1 meter). Thus, the predetermined frequency for the electrical pulses may be the velocity of the wire/cord 10 (0.1 m/s) divided by the desired marking distance (1 m), or (0.1 m/s) /(1 m) = 0.1 Hz. Or, every 10 seconds, the traveling wire/cord 10 may receive a magnetic mark from the electrical pulses received by the coil 20 at the take up end of the raw wire supply spool TUP (e.g., the electrical impulse frequency may equal the velocity of the wire/cord divided by the desired marking distance).

The magnetic mark may be detected by a conductive passive coil 40 at the output end of a wire/cord patenting/plating/drawing line (FIG. 5) prior to the wire/cord being received by a payout spool PO. The passive coil 40 may detect a fluctuation in magnetic field, or electrical tension/voltage, produced by the periodic magnetic marks of the traveling wire/cord 10. A microcontroller or other microprocessor may transmit the impulses to the active marking coil 20 and/or count the magnetic field fluctuations detected by the passive detecting coil 40 for determining when the wire/cord patenting/plating/drawing line should be stopped and the take up spool TUP replaced.

Alternatively, the coil 20 may be energized with electrical pulses at a predetermined frequency at the take up end of a raw supply wire spool TUP at the input end of a patenting/plating line (FIG. 5) with the payout spool PO being transferred to one or more other drawing/plating lines for further processing. In this case, the passive coil 40 may be located only at the output of the final line in the process.

While the foregoing description has been relative to wire/cord patenting/plating/fine drawing line operations, it is obviously applicable to any cable measurement performed for determining true cable length.

## Claims

1. An assembly for magnetically marking a wire (10) and for detecting a magnetic mark on the wire (10), the assembly comprising:
an apparatus for altering the wire;
an active coil (20) for magnetically marking the wire (10), the active coil (20) being disposed at a wire inlet of the apparatus; and
a passive coil (40) for detecting a magnetic mark, the passive coil (40) being disposed at a wire outlet of the apparatus.

2. The assembly as set forth in claim 1 wherein the apparatus includes one or more dies for reducing a diameter of the wire (10).

3. The assembly as set forth in claim 1 or 2 further including a microcontroller for transmitting electrical impulses to the active coil (20) and for counting fluctuations in magnetic field at the passive coil (40).

4. A method for magnetically marking a wire (10) and for detecting a magnetic mark on the wire (10), the comprising the steps of:
magnetically marking the wire (10) prior to entering an apparatus;
physically altering the wire with the apparatus; and
detecting a magnetic mark on the wire (10) after exiting the apparatus.

5. The method of claim 4 wherein the apparatus coats the wire.

6. The method as set forth in claim 4 or 5 wherein the marking step includes a passing of the wire (10) through an active coil (20).

7. The method as set forth in claim 4, 5 or 6 wherein the detecting step includes a passing of the wire (10) through a passive coil (40).

8. The method as set forth in claim 6 or 7 wherein the active coil (20) is energized with electrical pulses at a predetermined frequency.

9. The method as set forth in at least one of the previous claims 7 or 8 wherein the passive coil (40) detects a fluctuation in magnetic field produced by the magnetic mark.

10. The method as set forth in at least one of the claims 6 to 9 wherein the wire (10) passes through loops of the active coil (20) before entering the apparatus.

11. The method as set forth in at least one of the claims 7 to 10 wherein the wire (10) passes through loops of the passive coil (40) after exiting the apparatus.

12. The method as set forth in claim 4 wherein the altering step includes reducing a diameter of the wire (10).

13. The method as set forth in at least one of the claims 4 to 12 wherein the altering step includes coating the wire (10).

14. The method as set forth in at least one of the claims 7 to 13 further including the step of counting fluctuations in magnetic field at the passive coil (40) by a microprocessor.
